# EUROPEAN PATENT APPLICATION

(11) **EP 1 089 526 A2**
(43) Date of publication of application: **04.04.2001**
(21) Application number: 00307180.0
(22) Date of filing: 21.08.2000
(51) Int. Cl.: H04M 1/60, H04M 19/04

(54) **Telephone with sound customizable to audiological profile of user**

(30) Priority: 30.08.1999 US 386064
(71) Applicant: LUCENT TECHNOLOGIES INC., Murray Hill, New Jersey 07974-0636 (US)
(72) Inventor: Smith, David L., Hummelstown, Pennsylvania 17036 (US)
(74) Representative: Buckley, Christopher Simon Thirsk

(57) **Abstract**

There is disclosed a telephone device (20) including a tone generator for generating a sequence of tone signals over a predetermined frequency range. A speaker (38) converts the tone signals to audio signals. A feedback mechanism (50 or 60) is provided for a listener hearing the audio signals to indicate audiological sensing of the audio signals. The listener responses are stored in a memory (44) as an audiological profile. A processor (44) converts the audiological profile to a set of tap weights also for storage in the memory. When an incoming call is present, a filter receives the set of tap weights and the incoming call signal. The filter provides an output that is a filtered version of the incoming signal to drive the speaker. The telephone device (20) may be a wire-line, cellular, cordless, internet, PC-based telephone, telephone handset or telephone answering device.

## Description

### Technical Field

This application relates generally to telecommunications and particularly to telephones with audio amplification customizable to the audio logical profile of a user.

### Background of the Invention

People with hearing loss in audio frequencies within the telephone bandwidth may have difficulty understanding a voice signal as reproduced by a speaker in a telephone. Visual clues present in face-to-face conversations to supplement the reproduced voice signal and aid a hearing impaired person decipher spoken words are not present for most telephone conversations.

Some telephones have a volume control that permits the user/listener to adjust the volume of the reproduced voice signal emanating from a speaker to a level the user determines is most effective. Such volume controls typically provide substantially the same level of amplification for all frequencies in the telephonic bandwidth.

An alternate solution, disclosing U.S. Patent No. 5,796,821, provides an add-on amplifier with a headset which, when coupled to a telephone, permits a listener to adjust the volume of sound reproduced in each ear-piece of the headset independently of the volume of sound reproduced in the other ear-piece. Like the telephone volume control, the add-on amplifier typically provides substantially the same level of amplification for all frequencies in the telephonic bandwidth.

Hearing impaired persons may use hearing aids to compensate for hearing loss. Hearing impaired persons that use hearing aids may experience difficulty using a telephone because of the closeness of the telephone speaker to the hearing aid microphone. One approach to overcome this difficulty has been to provide a telephone that generates an infrared signal representative of the voice signal to be reproduced. The infrared signal is transmitted to and coupled with an infrared-receiving hearing aid. The hearing aid converts the infrared signal to a reproduced voice signal that a listener can hear.

What is desired is a telephone device in which the frequency response of the audio output can be modified so as to be customized to the audiological needs of the user, thereby obviating the need to couple a voice signal to a hearing aid to be custom amplified for a user.

### Summary of the Invention

In accordance with an embodiment of the invention, a telephone device includes a tone generator for generating a sequence of tone signals over a predetermined frequency range. A speaker converts the tone signals to audio signals. A feedback mechanism is provided for a listener hearing the audio signals to indicate audiological sensing of the audio signals. The listener responses are stored in a memory as an audiological profile. A processor converts the audiological profile to a set of tap weights also for storage in the memory. When an incoming call is present, a filter receives the set of tap weights and the incoming call signal. The filter provides an output that is a filtered version of the incoming signal to drive the speaker. The telephone device may be any known telephone device such as a wire-line, cellular, cordless, internet, PC-based telephone, video phone, telephone handset or telephone answering device.

### Brief Description of the Drawing

Figure 1 is a simplified schematic diagram of a telephone device in accordance with the invention;
Figure 2 is a flow diagram illustrating steps a processor may execute in conducting an audiological test;
Figure 3 is a diagram illustrating a series of fixed amplitude tone frequencies over the telephone network frequency range;
Figure 4 is a diagram illustrating a series of listener responses to tones over the telephone network frequency range;
Figure 5 is a diagram illustrating a series of tap magnitudes;
Figure 6 is a diagram illustrating the composite of listener response and filter contribution at the frequency of each tone;
Figure 7 is a simplified schematic diagram similar to Figure 1 illustrating a radio frequency link to the telephone network, or to a base station; and
Figure 8 is a schematic diagram illustrating a remote telephone device coupled to a telephone network that may be either wired or radio frequency to a telephone device of Figure 1 or Figure 6.

### Detailed Description

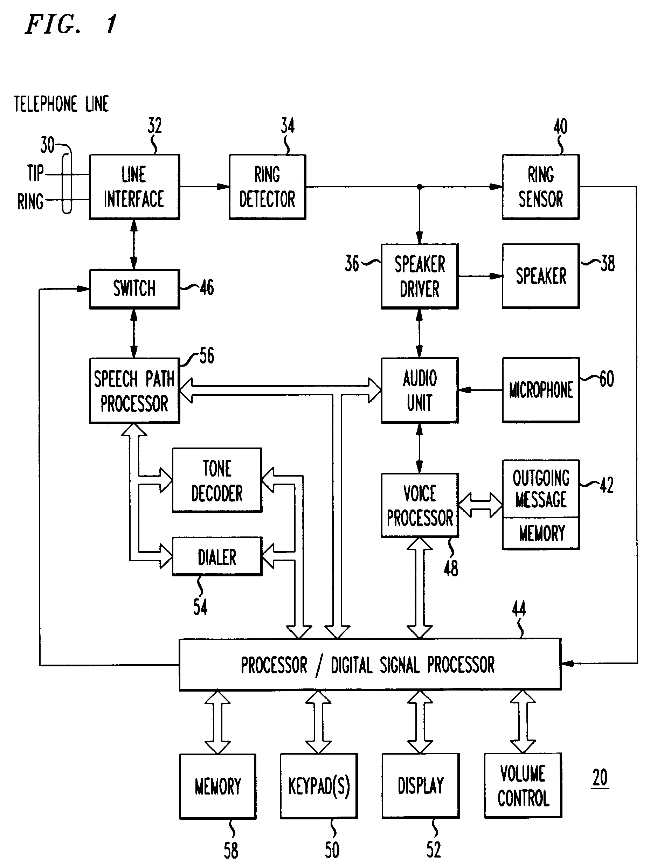

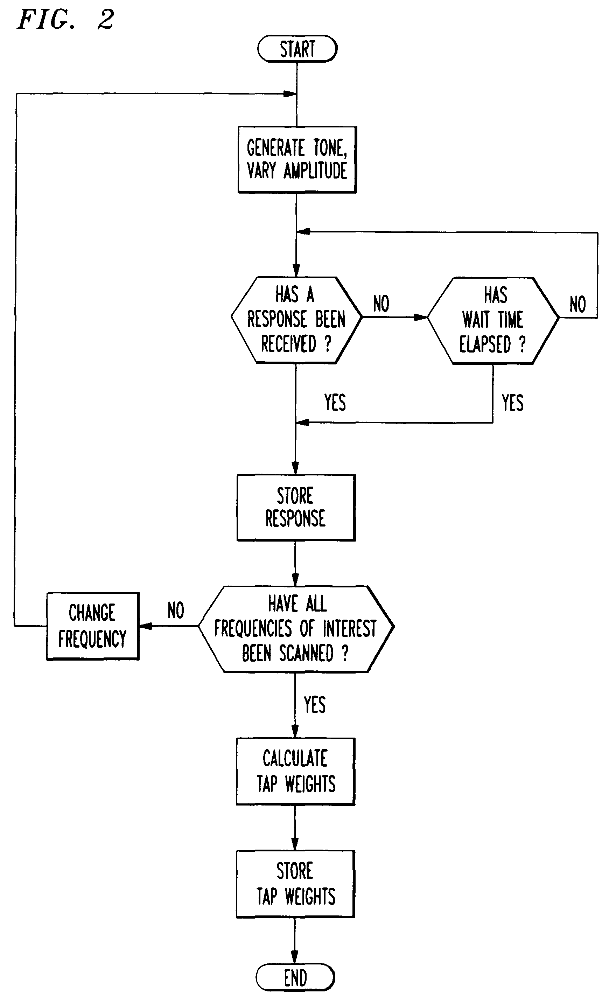

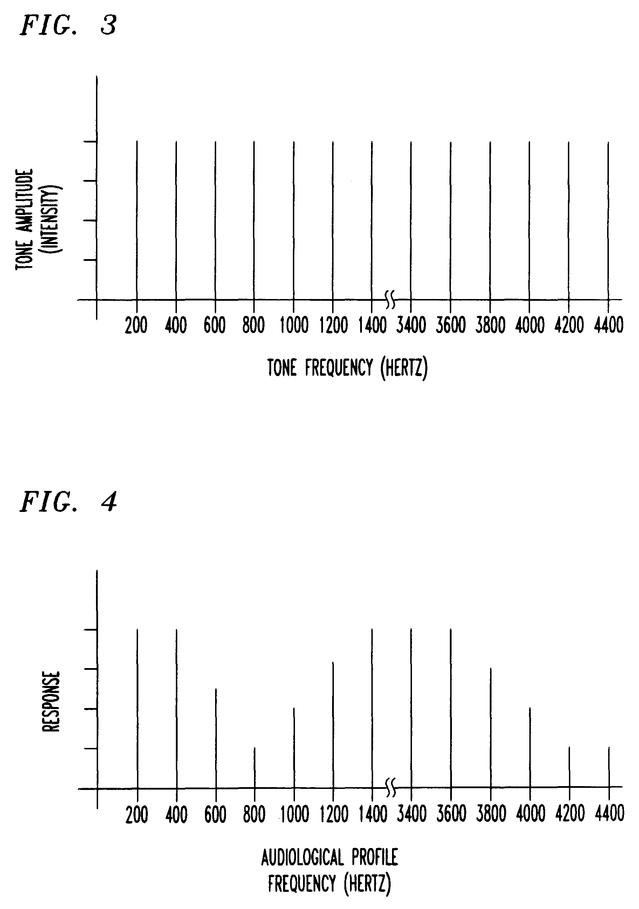

A simplified schematic diagram of a telephone device 20 in accordance with the present invention is illustrated in Figure 1. Telephone networks have a bandwidth that is less than the range of frequencies that can be heard by the human ear. Typically, the bandwidth of the telephone network extends from DC to about 4 kilocycles per second. An audiological test in the frequency of the telephone network can be conducted using a telephone device 20 having signal processing capability to determine the audiological profile of a user. The signal processing capability of the telephone device can then use the audiological profile to customize amplification of incoming voice signals for the listener, thereby compensating for hearing impairment of the user. One or more of audiological profiles may be stored, such as in memory of the telephone device, and retrieved for use by respective users.

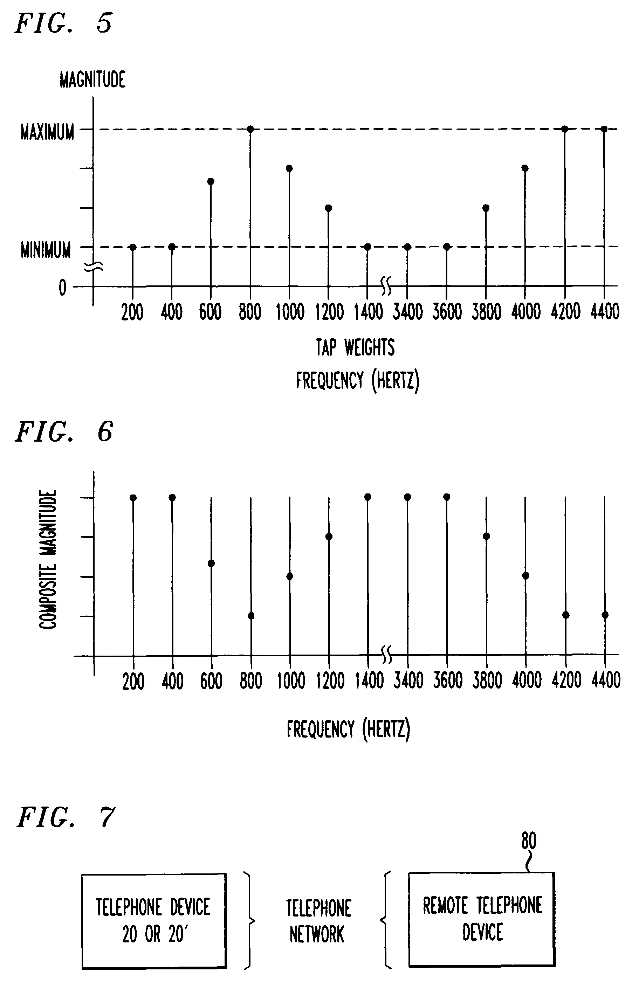

Telephone device 20 may be analog or digital, and may be a telephone, telephone answering device, videophone, personal computer, internet phone, or with line 30 and line interface 32 replaced with a radio frequency interface as shown in Figure 7, telephone device 20 may be a cellphone or cordless phone.

When phone device 20 receives an incoming 20 on line 30 from a telephone network, line interface 32 couple ring signals, tone signals and voice signals to other portions of telephone device 20. Ring detector 34 provides a ring signal to speaker driver 36 as well as to ring sensor 40. Speaker driver 36, upon receipt of the ring signal from ring detector 34, drives speaker 38 to provide an audio indication of an incoming call. Ring sensor 40 provides a ring sensing signal to processor 44 upon receipt of a ring signal from ring detector 34. Processor 44 couples switch 46 to line interface 32 to establish a voice path between telephone device 20 and the telephone network. When telephone device 20 is a telephone answering device, an automatically answered incoming call may receive a message stored in an outgoing message memory portion of memory 42. Voice processor 48 converts the digitally stored message in memory 42 to an outgoing message provided to the telephone network.

When placing a call from telephone device 20, a sequence of digits is keyed into keypad 50 which generates commands, such as dual tone multiple frequency (DTMF), to control operation of telephone device 20. Processor 44 receives outputs from keypad 50 and outputs the sequence of digits representing calling codes and/or telephone numbers to a display 52 and dialer 54. Dialer 54 converts the sequence of digits into DTMF signals and outputs the DTMF signals to speech patch processor 56. Stored numbers may be recalled from memory 58 by appropriate keys on keypad 50.

An audiological test may be initiated using telephone device 20 by pressing a key or sequence of keys on keypad 50, by voice recognition of words spoken into microphone 60, or by other methods. A flow diagram illustrating steps a processor 44 may execute in conducting an audiological test is shown in Figure 2. Processor 44 generates a tone of known frequency and provides the tone to speaker driver 36 to drive speaker 38 at the frequency of the tone. The amplitude may be varied to ascertain the threshold amplitude at which a listener can sense the frequency of the tone. A listener indicates their ability to hear the tone in any known manner such as by pressing a key on keypad 50, or speaking a response into microphone 50. The response is stored in memory 58 and subsequently used to compensate for hearing loss of the listener.

Another tone within the frequency range of interest is generated and a respone by the listener indicating the tone was heard is awaited. If an indication is forthcoming that the listener heard the tone, the response is stored in processor memory, and yet another tone is generated. When no indication is forthcoming that the listener heard the tone within a predetermined time, absence of a respone is stored in processor memory, another tone is generated, and the process repeated until the desired frequency range, typically the telephonic network frequency bandwidth, is scanned.

The sequence of tones may be generated at known, predetermined fixed frequency intervals over the frequency range of the telephonic network bandwidth as illustrated in Figure 3, or at uneven frequency intervals. As stated above, the amplitude may be varied to ascertain the threshold amplitude at which the listener can hear the tones. Since the frequency content of analog incoming call voice signals is filtered by the bandwidth of the telephone network, there is little advantage to extending the audiological test beyond the frequency range of the telephone network for analog calls. However, when information such as voice is digitized and transmitted over a telephone network as digital data, extending the audiological test beyond the frequency range of the telephone network may be beneficial.

The listener's responses over the frequency range of the telephone network represent the listener's audiological profile over the frequency range of the telephone network. An example is illustrated in Figure 4 in which the listener has difficulty hearing the 600-800 kHz frequencies and frequencies greater than 3600 kHz.

An incoming call to telephone device 20 would be digitized, such as by passing through an analog-to-digital converter, then filtered, or a stored message in a digital memory could be filtered as it is played back. The incoming call as digitized or a stored message is passed through a digital filter in processor 44. The digital filter includes tap weights at each frequency increment that have an inverse proportional relationship to the magnitude of the corresponding audiological profile frequency response, as shown in Figure 5. One skilled in the art could design a digital filter for implementation in processor 44 and generate tap weights in processor 44 that have an inverse proportional relationship to the listener's responses to the tones, collectively the listener's audiological profile. This may result that the composite of the filter response at each frequency in the magnitude of the corresponding audiological profile at each frequency is substantially with uniform magnitude over the frequency range of interest. Such a curve is shown in Figure 6. Alternatively, the digitized message could be filtered to compensate for a listener's audiological profile prior to being stored in memory 58.

Since the audiological test will take some time, it is preferably not conducted during an incoming call. The audiological profile, or preferably the filtered tap weights, may be stored in memory 58 for subsequent use. The audiological test may be administered and the filter tap weights may be generated off-line at a time convenient for the user such as at the time of installation of telephone device 20 or 20', or during a session when an outgoing voice message is generated or updated, and stored. At these times there are no incoming calls. For a single-user telephone device 20, each time the telephone device 20 is used, incoming call voice signals could be automatically filtered using the customized tap weights of the single-user listener. Incoming voice signals could be automatically filtered using the customized tap weights of the single-user listener whether initiating or receiving a call. In this manner, the filtering process would compensate for the hearing loss of the user. The audiological profile may be updated as often as thought necessary as the hearing of a user changes over time. Provisions are included to turn-off the automatic filtering feature if so desired.

In an environment where there are multiple users of telephone device 20, the audiological profile or filtered tap weights for each user could be generated as described above, stored in memory 58, and invoked by the corresponding user. Each user could invoke their audiological profile or filtered tap weights upon initiating a call or receiving a call. A user's audiological profile or filtered tap weights may be invoked in any manner, such as but not limited to, pressing a key or sequence of keys on keypad 50, by voice recognition of words spoken into microphone 60, by fingerprint recognition, or other method. The audiological profiles may be updated as often as though necessary as the hearing of each user changes over time. Provisions are included to have telephone device 20 operte without such filtering if so desired.

While the digital filter would adjust frequency components in the incoming call voice signal relative to the audiological profile of the listener to compensate for any hearing impairment of the listener, there may still be a volume control to adjust the overall loudness of the speaker 38 output. In this manner, the sound produced by telephone 20 or 20' has a frequency profile customized to compensate for the hearing impairments of the listener, as determined in the above-described audiological test.

Figure 7 is a schematic diagram of a telephone device 20' similar to the telephone device 20 in Figure 1. In Figure 7, telephone device 20' is not coupled to a telephone network by a telephone line but rather by a radio frequency link and an antennae. Such a telephone device 20' may be a cellular phone or a cordless phone coupled to a base station thence to the telephone network. In a cordless phone, the functionality discussed herein could be either in the handset or the base unit.

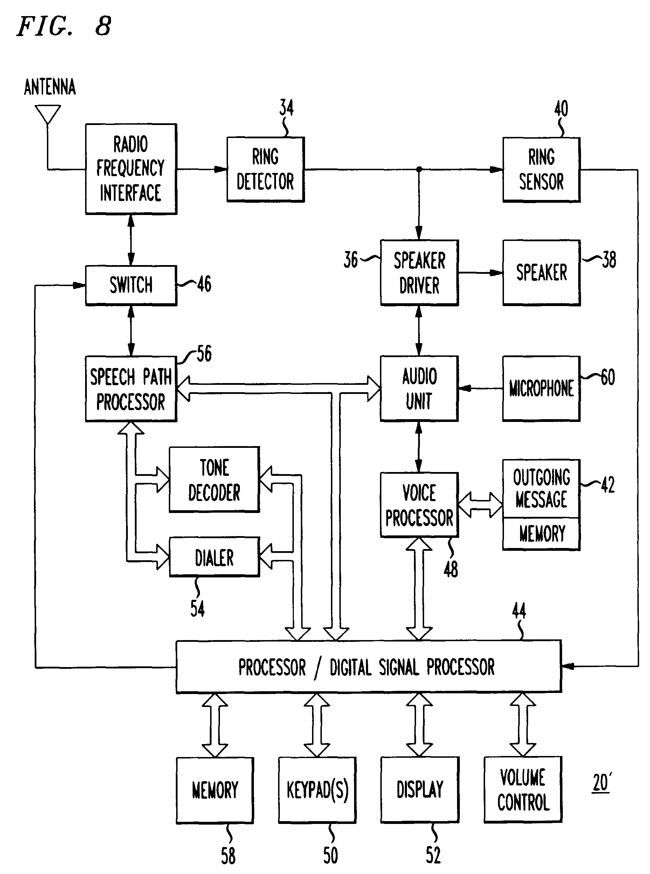

Processor 44 of telephone device 20 or 20' may have a second filter for processing outgoing voice signals. The audiological profile of a remote listener using a remote telephone device 80 as illustrated in Figure 8 coupled through a telephone network may be created in telephone device 20 or 20'. The audiological profile of the remote listener may be created either from the remote telephone device 80 or from telephone device 20 or 20' in a manner similar to that described above. The audiological profile of the remote user, with a corresponding set of tap weights may be stored either in the remote telephone device 80 being used by the remote listener or by a telephone device 20 or 20'. The audiological profile of the remote listener is converted to tap weights for the second filter in the manner described above by a processor either in the remote listener's telephone device 80 or in telephone device 20 or 20'. The tap weights for the second filter at each frequency increment are generated to have an inverse proportional relationship to the magnitude of the corresponding audiological profile frequency response for the remote listener. Outgoing voice signals from telephone device 20 or 20' destined to pass through the telephone network are filtered by the second filter. When the second filter is a digital filter, outgoing voice signals may require passing through an analog-to-digital converter prior to being filtered by the second filter, and the filtered digital signal may be passed through a digital-to-analog converter. The digital-to-analog converter may be part of a speech path processor 56 to convert the filtered digital signal to an analog signal.

While the architecture of a telephone device has been illustrated, the architecture of a telephone devices considered within the scope of the invention vary. The telephone device may include more than one processor, and the processor may take many forms, such as a microprocessor, digital signal processor, or microcontroller.

## Claims

1. A telephone device, including a speaker and a processor, characterized by
a tone generator for generating a sequence of tone signals over a predetermined frequency range, the speaker for converting the tone signals to audio signals, a feedback mechanism for a listener having the audio signals to indicate audiological sensing of the audio signals, a memory for storing the listener responses as an audiological profile, the processor for converting the audiological profile to a set of tap weights for storage in the memory, and a filter for receiving the set of tap weights and a digitized incoming call signal when an incoming call is present the filter providing as an output a filtered version of the digitized incoming call signal to drive the speaker.

2. A telephone device as recited in claim 1, further characterized by an analog-to-digital converter to generate the digitized incoming call signal from an incoming call.

3. A telephone device as recited in claim 1, characterized by the memory can store more than one set of tap weights, a selected set of the tap weights having provided to the filter..

4. A telephone device as recited in claim 1, further characterized by a volume control for setting overall loudness of the audio signals produced by the speaker.

5. A telephone device as recited in claim 1, further characterized by a second filter for receiving a second set of tap weights, the second filter providing as an output a filtered version of an outgoing voice signal..

6. A method of compensating for the audiological profile of a listener of a telephone device, characterized by the steps of performing an audiological test over a frequency range of interest to generate an audiological profile of the listener, generating tap weights for a filter from the audiological profile, filtering an incoming call signal through a filter employing the tap weights to generate a filtered cell signal, and driving a speaker with the filtered call signal.

7. The method as recited in claim 6, further characterized by the step of digitizing the incoming call signal before filtering the incoming call signal.

8. The method as recited in claim 6, characterized by the generating step comprises generating tap weights having an inverse proportion relationship to the audiological profile.

9. The method as recited in claim 6, wherein the step of performing audiological test further comprises the steps of
initiating generation of a sequence of tones over the frequency range of interest; and
eliciting a response from the listener upon hearing each of the sequence of tones.
